# EUROPÄISCHE PATENTSCHRIFT

(11) **EP 1 399 454 B1**
(45) Veröffentlichungstag und Bekanntmachung des Hinweises auf die Patenterteilung: **24.10.2007**
(21) Anmeldenummer: 02761909.7
(22) Anmeldetag: 10.04.2002
(51) Int. Cl.: C07F 9/58, C07F 9/6509, C05G 3/08

(54) **HETEROZYKLISCH-SUBSTITUIERTE (THIO)PHOSPHORSÄURETRIAMIDE**
HETEROCYCLICALLY SUBSTITUTED (THIO)PHOSPHORIC TRIAMIDES
(THIO) PHOSPHORYLTRIAMIDES A SUBSTITUTION HETEROCYCLIQUE

(30) Priorität: 12.04.2001 DE 10118322
(43) Veröffentlichungstag der Anmeldung: 24.03.2004
(73) Patentinhaber: SKW STICKSTOFFWERKE PIESTERITZ GmbH, 06886 Wittenberg (DE)
(72) Erfinder: HUCKE, André, 06896 Reinsdorf (DE); NICLAS, Hans-Joachim, 12435 Berlin (DE); MICHEL, Hans-Jürgen, 04827 Machern (DE); KRISTOF, Wolfgang, 06886 Wittenberg (DE); WOZNIAK, Hartmut, 04451 Cunnersdorf (DE)
(74) Vertreter: Schneider, Michael
(86) Internationale Anmeldenummer: PCT/EP2002/003996
(87) Internationale Veröffentlichungsnummer: WO 2002/083697

(56) Entgegenhaltungen:
- EP-A- 0 119 494
- DD-A- 222 957
- DE-A- 2 928 831
- US-A- 4 517 004
- US-A- 5 364 438
- US-A- 5 951 736

## Beschreibung

Die vorliegende Erfindung betrifft substituierte N-(2-Pyridinyl)phosphorsäuretriamide, Verfahren zu ihrer Herstellung und Zusammensetzungen, die die substituierten N-(2-Pyridinyl)phosphorsäuretriamide und ein harnstoffbasiertes Düngemittel umfassen. Die Erfindung betrifft weiter die Verwendung der substituierten N-(2-Pyridinyl)phosphorsäuretriamide zur Regulierung bzw. Hemmung der enzymatischen Harnstoffhydrolyse, vorzugsweise in Kombination mit Mitteln zur Einschränkung der Nitrifikation, im Rahmen der Vermeidung von Stickstoffverlusten bei der Anwendung harnstoffbasierter Düngemittel sowie zur Reduzierung der Ammoniaklast in Tierställen infolge einer weitestgehenden Ausschaltung der Harnstoffhydrolyse.

Harnstoff ist ein ursprünglich biogenes Stoffwechselprodukt, das durch das Enzym Urease in Ammoniak und Kohlendioxid gespalten wird. Die Reaktion verläuft außerordentlich schnell und effektiv und ist somit für N-Verluste bei der Anwendung von harnstoffbasierten Düngemitteln verantwortlich, zumal dann, wenn der Boden nicht über eine ausreichende Sorptionskraft verfügt, um das frei gewordene Ammoniak in Form von Ammoniumionen zu binden. Dadurch gehen der Landwirtschaft jährlich beträchtliche Mengen an Stickstoff verloren, die auf diese Weise zur Umweltbelastung beitragen und andererseits einen erhöhten Düngemittelbedarf erfordern.

Andererseits können unter ungünstigen Klimabedingungen und/oder bei Ausbringung auf leichte Böden spontan hohe Ammoniakkonzentrationen im Boden auftreten, die dann zusätzlich die Keimung bzw. das Auflaufen der Jungpflanzen negativ beeinträchtigen.

Bedenkt man, dass Harnstoff dasjenige Stickstoffdüngemittel verkörpert, das prozentual über den größten N-Gehalt verfügt sowie weltweit mit Abstand der dominierende N-Dünger ist, wird die Suche nach praktikablen Lösungen zur Reduzierung der ureasebedingten N-Verluste verständlich. Um dieses Ziel zu erreichen, ist eine Vielzahl von Lösungen vorgeschlagen worden. Zu nennen sind in diesem Zusammenhang die saure Umhüllung von Harnstoffprills bzw. -granalien, um auf diese Weise entstehenden Ammoniak durch Salzbildung abfangen zu können oder das Coating mit Substanzen, wodurch Harnstoff verlangsamt so freigesetzt wird, dass das entstehende Ammoniak problemlos "abgepuffert" werden kann.

Im gleichen Sinne verursacht die ureasekatalysierte Harnstoffhydrolyse durch Spaltung des in Kot und vor allem in Harn befindlichen Harnstoffs in Tierställen zum Teil erhebliche Ammoniaklasten, die, abgesehen von einer Geruchsbelästigung bei entsprechend hoher Konzentration, die Entwicklung und das Wachstum der Tiere negativ beeinflussen. Vorgenannte, für die Harnstoffdüngung zumindest noch vorstellbare Lösungen scheiden im Tierstall aus.

Neben den N-Verlusten durch unkontrollierte ureasekatalysierte Hydrolyse des Harnstoffs geht Stickstoff in Form von Nitrat verloren, das-durch Auswaschung oder Verlagerung in tiefere Bodenschichten der Planzenernährung entzogen wird. Darüber hinaus können diese N-Verluste noch erhöht werden, wenn im Verlaufe der raschen Nitrifikation von Ammoniumionen relativ große Mengen an Nitrat gebildet werden, die ihrerseits durch einsetzende Denitrifikation in molekularen Stickstoff überführt werden können und damit gleichfalls für die pflanzliche Ernährung nicht mehr verfügbar sind.

Die N-Verluste aus der ureasekatalysierten Hydrolyse des Harnstoffs und der Nitrifikation können unter ungünstigen Bedingungen, besonders in tropischen und subtropischen Klimaten, bis zu 50 % betragen. Um dieses Verlustpotenzial zu minimieren, werden bedarfsgerecht mehrfach geteilte Düngergaben empfohlen, die jedoch für den Landwirt infolge zusätzlicher Applikationskosten mit erheblichen arbeitswirtschaftlichen Nachteilen und entsprechenden Mehraufwendungen verbunden sind.

Andere Möglichkeiten bestehen in der gezielten Hemmung der ureasekatalysierten Harnstoffhydrolyse auf der einen und der Nitrifikationshemmung auf der anderen Seite.
Dabei erscheint im ersten Fall der Einsatz solcher Substanzen aussichtsreich, die zu einer Ureasehemmung führen, wobei sich deren Anwendung zur Reduktion der Ammoniakbildung selbstverständlich auch in Tierställen anbietet. Durch den Einsatz von Ureaseinhibitoren wird eine effektive Möglichkeit aufgezeigt, die unter Normalbedingungen außerordentlich schnell verlaufende enzymatische Harnstoffhydrolyse deutlich zu verlangsamen. Vermittels der Verzögerung dieser Enzymreaktion kann der Düngeharnstoff unzersetzt in tiefere Bodenschichten penetrieren.

Damit sind Ammoniakverluste durch das Sorptionspotential der darüber befindlichen Bodenschichten anders als an der Bodenoberfläche nahezu ausgeschlossen. Außerdem gelingt es auf diesem Wege, Harnstoff selbst bzw, harnstoffhaltige Dünger für leichte Bodenstandorte verlustfrei zur Anwendung zu bringen.

In Tierställen kann die Emission von Ammoniak aus Dung und tierischen Exkrementen durch Zusatz eines Ureaseinhibitors auf effektive Weise eingeschränkt werden.

Aus der Sicht der verlustfreien und damit umweltentlastenden Lagerung und Ausbringung von organischen Düngern wie beispielsweise Mist oder Gülle ist der Einsatz von Ureaseinhibitoren, ggf. auch in Kombination mit Nitrifikationsinhibitoren, gleichfalls eine empfehlenswerte Maßnahme, um die Dünger- und damit Düngungseffizienz derartiger Dünger zu erhöhen.

Andererseits ist bekannt, dass speziell in der Tierfütterung von Wiederkäuern die Versorgung der Tiere mit proteinreicher und damit leistungsfördernder Nahrung teilweise ein finanzielles Problem für den Landwirt darstellt, in einigen Regionen der Erde jedoch auch aus klimatischer Sicht ein über das volle Jahr unlösbares Problem ist. Wie die neuere Zeit gezeigt hat, ist die Substitution pflanzlichen Eiweißes durch Tiermehl in der Wiederkäuerernährung gesundheitspolitisch nicht zu vertreten. Um dieser Situation gerecht zu werden, bietet sich anstelle hochwertiger proteinreicher pflanzlicher Ernährung der Tiere die Substitution dieser Nahrungsquelle durch sogenannte "non-protein-nitrogen-Verbindungen" (NPN-Verbindungen) an, deren bedeutendster Vertreter der Harnstoff sein könnte, wenn es gelingt, die im Pansen der Tiere ablaufende ureasekatalysierte Harnstoffhydrolyse so zu kontrollieren, dass die freigesetzten Ammoniakraten durch anwesende Mikroorganismen sofort zu mikrobiellem Protein verarbeitet werden und demzufolge keine toxischen Effekte auslösen können. Hier bietet sich gleichfalls der Einsatz geeigneter Ureaseinhibitoren an.

Aus der Literatur ist bekannt, dass bestimmte organische, aber auch anorganische Verbindungen die ureasekatalysierte Harnstoffhydrolyse zu hemmen vermögen (vgl. Pharmazie 35, 63-68, (1980)).

Mit der Entdeckung der Phosphorsäureesterdiamide (DD 122177) sind Verbindungen gefunden worden, die äußerst effektive Ureaseinhibitoren darstellen. Ähnlich wirksam ist eine Reihe von Derivaten des Phosphorsäuretriamids einschließlich des Grundkörpers (vgl. bspw. US 4.540.428, US 4.676.822, US 4.696.693, US 4.537.614, US 4.517.004, EP 0.119.487), von denen das *N*-(n-Butyl)thiophosphorsäuretriamid (NBTPT) als einziger Vertreter bisher kommerzialisiert wurde (IMC AGRICO Corp., Produktbezeichnung Agrotain^{®}).

Bei genauer Prüfung dieser Substanzen wird jedoch augenscheinlich, dass sie relativ hydrolyseanfällig sind, wodurch vor allem ihre Wirkungsdauer und somit ihre Anwendbarkeit erheblich eingeschränkt ist. Zum anderen sind sie teilweise nur in geringer Ausbeute oder mittels aufwendiger Herstellungsverfahren erhältlich, so dass eine vertretbare Ökonomie nicht gegeben ist.

Weitere, die Anwendung der erwähnten Verbindungen beeinflussende Nachteile sind deren unterschiedliches Migrationsverhalten zu Harnstoff, infolgedessen es zu einer Auftrennung zwischen Inhibitor und Substrat Harnstoff kommt und vor allem im Falle der größeren Beweglichkeit der Harnstoffmoleküle keine oder nur eine unzureichende Enzymhemmung eintritt. Möglich ist aber auch, dass ursprünglich wirksame Ureaseinhibitoren, wenn sie mit Boden in Kontakt kommen, ihre Inhibitorwirkung durch Reaktion mit oder Fixierung an Bodenbestandteile verlieren.

Als Nitrifikationsinhibitoren sind beispielsweise substituierte Pyrazole (DD 131.063, US 3.363.690), Triazole (DE-OS 1.804.994, US 3.697.244, US 3.701.645) aber auch Wirkstoffkombinationen auf der Basis von Pyrazolverbindungen und Dicyandiamid (DD 222.957) oder von Triazolderivaten und Dicyandiamid (WO 95/22515) vorgeschlagen worden. Weiterhin werden durch US 5.364.438 neue flüssige Stickstoffdünger beschrieben, die neben gelöstem Stickstoff in Form von Harnstoff und anderen Stickstoffnährformen auch Anteile von *N*-(n-Butyl)thiophosphorsäuretriamid (NBTPT) und Dicyandiamid (DCD) enthalten.

Inzwischen vorliegende Untersuchungsergebnisse zur gleichzeitigen Anwendung von harnstoffbasierten Düngemitteln mit NBTPT und DCD weisen jedoch aus, dass die beabsichtigte Senkung der Ammoniakverluste durch die zusätzliche Gegenwart eines Nitrifikationsinhibitors zum Ureasehemmstoff nahezu aufgehoben wird. Dieser Befund spiegelt sich in den Erträgen wider, die teilweise noch unter dem Niveau der als Vergleich herangezogenen alleinigen Harnstoffdüngung lagen (J. Plant Nutr. 21, 245-252, (1998); Biol. Fertil. Soils 22, 89, (1996)).

Der vorliegenden Erfindung liegt daher die Aufgabe zugrunde, solche Verbindungen für die Praxis zur Verfügung zu stellen, die in der Lage sind, bei Anwendung mit Düngeharnstoff oder anderen harnstoffbasierten Düngern, wozu insbesondere organische oder mineralische Dünger zählen, die ureasekatalysierte Harnstoffhydrolyse auf ein solches Maß zu beschränken, dass daraus resultierende Verluste an Düngerstickstoff, solange sich dieser auf bzw. in der Bodenoberfläche befindet, in Form von Ammoniak nahezu auszuschließen sind bzw. die Ammoniaklast in Tierställen durch spontane Zersetzung des Harnstoffs derart zu reduzieren, dass die damit verbundenen Nachteile nicht wirksam werden können. Durch Anwendung dieser Verbindungen in Kombination mit einem Nitrifikationsinhibitor soll eine weitere Verbesserung der N-Ausnutzung in harnstoffbasierten Düngemitteln erreicht werden.

Gleichermaßen sollen diese Ureaseinhibitoren die im Pansen von Wiederkäuern ablaufende Harnstoffspaltung bei Einsatz von Harnstoff im Rahmen der Tierfütterung so verlangsamen, dass die Tiere durch sonst erfolgende Ammoniakintoxikationen keine Schäden erleiden und andererseits den auf diese Weise angebotenen Stickstoff für die körpereigene Proteinbiosynthese verwerten.

Diese Aufgabe wird erfindungsgemäß durch die Bereitstellung der substituierten N-(2-Pyridinyl)phosphorsäuretriamide entsprechend Anspruch 1 gelöst.

Es hat sich nämlich überraschenderweise gezeigt, dass die erfindungsgemäßen N-(2-Pyridinyl)phosphorsäuretriamide äußerst effektive Ureaseinhibitoren mit einer sehr guten Hydrolysebeständigkeit darstellen und außerdem technisch problemlos und kostengünstig aus einfachen Ausgangsstoffen herstellbar sind .Die erfindungsgemäßen N-(2-Pyridinyl)phosphorsäuretriamide sind mit gebräuchlichen Verfahren leicht in Harnstoff oder harnstoffbasierte Düngemitteln einarbeitbar, womit eine effiziente Ausbringung zusammen mit dem Düngemittel bzw. Verfütterung an Wiederkäuer gegeben ist. Sie sind ausreichend wasserlöslich und toxikologisch unbedenklich.

Die substituierten N-(2-Pyridinyl)phosphorsäuretriamide gemäß der vorliegenden Erfindung entsprechen der allgemeinen Formel (I) 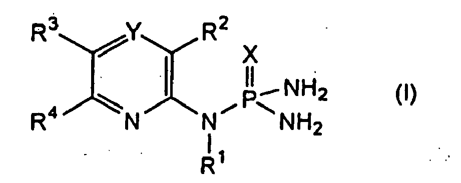 inder bedeuten:

| R¹ | R² | R³ | R⁴ | Y |
|---|---|---|---|---|
| H | NO₂ | H | H | CH |
| H | H | H | NO₂ | CH |
| H | H | Br | H | CH |

und X = 0

Die erfindungsgemäßen Verbindungen (I) sind analog bekannter Verfahren zugänglich, wobei X, Y, R¹, R², R³ und R⁴ die oben beschriebene Bedeutung besitzen Vorzugsweise erfolgt die Herstellung der N-(2-Pyridinyl)phosphorsäuretriamide in der Weise, dass man
a₁) Phosphorpentachlorid (PCl₅)- mit einem 2-Aminopyrimidin (IV) in annähernd äquimolarem Verhältnis (Molverhältnis 1,1 : 1 bis 0,9 : 1) in einem inerten organischen Lösemittel und unter Schutzgasatmosphäre bei 0 bis 50 °C entsprechend Gleichung (1) zu Verbindungen des Typs (A) reagieren lässt, welche ohne weitere Isolation mit einer annähernd äquimolaren Menge (1,1 : 1 bis 0, 9 : 1) Ameisensäure zu Phosphorsäureamiddichloriden des Typs (B), in denen R¹ Wasserstoff, y = CH
   und x = 0 ist, umgesetzt werden (vgl 1 N. Zhmurova, A. V. Kirsanov Zh. Obshch. Khim. 30, 4048 (1960) und N. V. Sazonov, A. A. Kropacheva, T. S. Safonova Khim. Farm. Zh. 5, 20 (1971)). 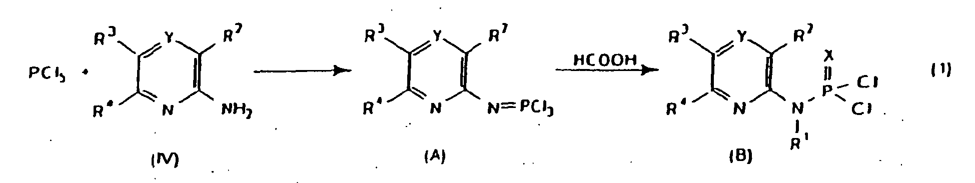 oder
a₂) 2-Aminopyridine (IV) oder deren Hydrochloride mit einem Uberschuss Phosphorylchlorid (POCl₃) bei Temperaturen von 80 bis 120 °C oder in Anwesenheit einer Base bspw. in Form eines tertiaren Amins (Triethylamin, Pyridin) bei Raumtemperatur entsprechend Gleichung (2), ggf. in einem organischen Lösemittel zu Phosphorsäureamiddichloriden des Typs (B), in denen R¹=Wasserstoff, y=CH und x=0 ist, umsetzt (vgl. A.A. Kropacheva, N.V. Sagonov Zh. Obshch. Khim. 31, 360] (1961); H. Brint zinger, K. Pfannenstiel, H. Koddebusch Chem. Ber. 82, 398, (1949); A. Michaelis Liebigs. Ann. Chem. 326, 129, 201, 310 (1903)). 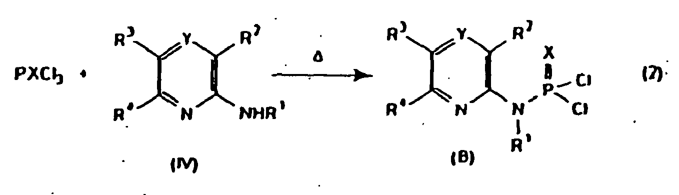 und anschließend
b) die in Stufe a₁) oder a₂) gebildeten Verbindungen des Typs B mit Ammoniak ggf. in einem organischen Lösemittel bei Temperaturen von -80 bis 20°C entsprechend Gleichung (3) zum gewünschten Endprodukt reagieren lässt.

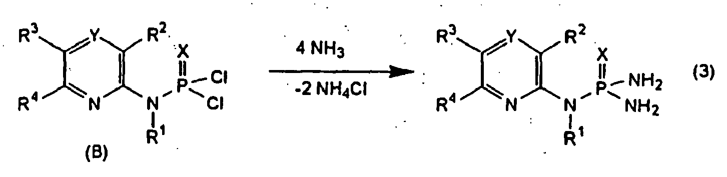

Als organisches Lösemittel wird in Stufe a₁) vorzugsweise Chloroform oder Toluol, in Stufe a₂) Chloroform, Toluol Diethylether oder THF und in Stufe b) bevorzugt Dichlormethan, Chloroform, Diethylether oder THF verwendet. Es hat sich als besonders vorteilhaft erwiesen, die Reaktionsstufe a₁) unter Schutzgasatmosphäre (Stickstoff, Argon) durchzuführen.

Die erfindungsgemäßen *N*-(2-Pyridinyl) phosphorsäuretriamide weisen eine für praktische Belange ausreichende Dauerwirkung hinsichtlich ihres Inhibitorpotentials auf, wodurch sie befähigt sind, die enzymatische Harnstoffhydrolyse so zu verlangsamen bzw. vorübergehend auszuschalten, dass Ammoniakverluste im Rahmen von Düngungsmaßnahmen unter Verwendung organischer und/oder mineralischer harnstoffhaltiger Stickstoffdünger auf ein Minimum reduziert werden bzw. das Auftreten schädlicher oder lästiger Ammoniakkonzentrationen ausgeschlossen wird.

Dabei ist es unerheblich, ob sich die Wirkung der erfindungsgemäßen Verbindung auf Düngüngsmaßnahmen oder auf vorbeugende Maßnahmen zur Vermeidung hoher Ammoniakkonzentrationen in Tierställen erstreckt, oder aber für den Einsatz von Futterharnstoff im Rahmen der Wiederkäuerernährung genutzt wird.

Die erfindungsgemäßen Verbindungen werden vorzugsweise gemeinsam mit harnstoffbasierten Düngemitteln, d.h. Düngemitteln in denen der Hauptstickstofflieferant Harnstoff ist, vorzugsweise in einer Menge von 0,05 bis 30 Gew.-% bezogen auf das Gewicht des harnstoffbasierten Düngemittels, ausgebracht oder dem Futterharnstoff bzw. den in Tierställen anfallenden tierischen Ausscheidungen zugesetzt. Dabei ist es unwesentlich, ob sie oberflächig vorher auf den Dünger aufgebracht, darin inkorporiert, gemeinsam oder in vertretbarem Zeitraum getrennt von harnstoffhaltigen Düngemitteln ausgebracht werden.

Zusammensetzungen umfassend die erfindungsgemäßen N-(2-Pyridiny)-phosphorsäuretriamide und ein harnstoff-basiertes mineralisches und/oder organisches Düngemittel sind ein weiterer Gegenstand der Erfindung.

Die erfindungsgemäßen Verbindungen können zur gleichzeitigen Verhinderung bzw. Einschränkung der ureasekatalysierten Harnstoffhydrolyse sowie der Nitrifikation auf die oben beschriebene Weise mit einer Verbindung ausgewählt aus der Gruppe der
a) Pyrazol-Derivate der allgemeinen Formel (V) deren Salze oder Komplexverbindungen, 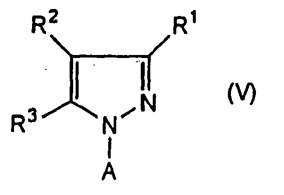 in der
   R¹, R², R³ unabhängig voneinander Wasserstoff, Halogen oder C₁-C₈-Alkyl und
   A den Rest 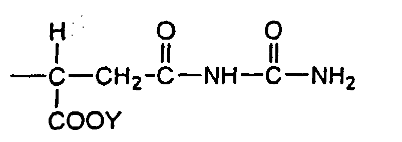 mit Y = H, Na, K, NH₄
   oder den Rest

   -CH₂-B

   mit B = (Di)alkylamino, 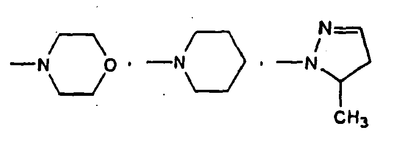 oder den Rest 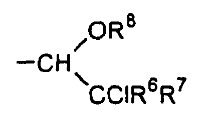
   mit R⁶, R⁷ = H oder Cl und
   R⁸= H oder 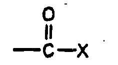 mit X = C₁-C₈-Alkoxy, C₁-C₈-Alkylamino, C₆-C₁₀-Arylamino
   oder den Rest 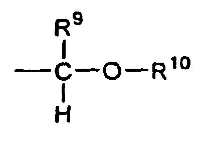 mit R⁹, R¹⁰ = H, C₁-C₈-Alkyl, C₇-C₁₈-Alkylaryl, C₆-C₁₀-Aryl
   bedeuten,
b) 1H-1,2,4-Triazole, deren Salze oder Komplexverbindungen sowie
c) Dicyandiamid kombiniert werden.

Die nachfolgenden Beispiele erläutern die Erfindung, ohne sie einzuschränken.

### Beispiele

Nachfolgend werden die Synthesen repräsentativer Verbindungen beschrieben, ohne auf diese Beispiele und Verfahren beschränkt zu sein.

### Vergleichsbeispiel 1

### N-(2-Pyridinyl)phosphorsäuretriamid (Verbindung Nr. 1)

### Variante A:

Unter Inertgas werden 10 g (0,106 mol) 2-Aminopyridin in 30 ml Chloroform suspendiert und anschließend 22,1 g (0,106 mol) PCl₅ zugegeben. Dabei erfolgt unter Aufschäumen ein Temperaturanstieg bis ca. 30 °C. Man lässt 30 min bei Raumtemperatur rühren und erhitzt danach 3 h unter Rückfluss. Das Reaktionsgemisch wird auf 5-10 °C abgekühlt und 4,88 g (0,106 mol) Ameisensäure zugetropft. Man lässt 30 min nachrühren, entfernt das Lösemittel im Vakuum und schlämmt den Rückstand in Hexan auf. Der Rückstand wird abgesaugt und mehrmals mit Hexan gewaschen. Nach Trocknen erhält man 21,9 g (98 %) *N*-(2-Pyridinyl)phosphorsäureamiddichlorid (Fp 184 °C). Das Rohprodukt wird ohne weitere Reinigung zur Aminierung eingesetzt.

In 100 ml Diethylether werden bei -70 - -40 °C ca. 100 ml Ammoniak einkondensiert. Unter Rühren fügt man bei ca. -60 °C portionsweise 21,9 g (0,095 mol) *N*-(2-Pyridinyl)phosphorsäureamiddichlorid zu. Nach 2 h bei -30 °C lässt man über Nacht bei Raumtemperatur den Ammoniak abdampfen. Der ausgefallene Feststoff wird abgesaugt und 2 h mit 40 ml Diethylamin und 400 ml Chloroform ausgekocht. Nach Abkühlen wird das Triamid abgesaugt, mit Chloroform gewaschen und getrocknet.
Ausbeute: 4,8 g, 30 %;
Fp: 147-148 °C;
¹³C-NMR (D₂O) : δ [ppm] = 111,9 (d, *J* = 5,4 Hz); 117,2; 139,2; 147,5; 153,0 (d, *J* = 3,0 Hz);
¹H-NMR (D₂O): δ [ppm] = 8,17 (d, 1H, *J* = 3,8 Hz); 7,73 (t, 1H, *J* = 7,5 Hz); 7,08 (d, 1H, *J* = 8,4 Hz) ; 7,01 (t, 1H, *J* = 6,1 Hz);
31_{P-NMR} (D₂O) : δ [ppm] = 14,6;

| | | | | | |
|---|---|---|---|---|---|
| EA: | ber. | C 34,9 %; | H 5,3 %; | N 32,6 %; | P 18,0 % |
| | gef. | C 34,3 %; | H 5,2 %; | N 32,6 %; | P 18,0 % |

### Variante B:

Zu 50 g (0,326 mol) Phosphorylchlorid werden unter Eiskühlung 5 g (0,053 mol) 2-Aminopyridin gegeben und anschließend 8 h zum Sieden erhitzt. Nach Rühren über Nacht wird abgesaugt, mit wenig Diethylether gewaschen und getrocknet (9,3 g, 83 %). Das N-(2-Pyridinyl)phosphorsäureamiddichlorid wird auf die unter Variante A beschriebene Weise mit Ammoniak umgesetzt (4,5 g, 59 %, Fp 1.42-143 °C).

### Vergleichsbeispiel 2

### N-(6-Methyl-2-pyridinyl)phosphorsäuretriamid (Verbindung Nr. 2)

Unter Inertgas werden 10 g (0,093 mol) 6-Methyl-2-aminopyridin in 30 ml Chloroform gelöst und anschließend 19,3 g (0,093,mol) PCl₅ zugegeben. Dabei erfolgt ein Temperaturanstieg bis ca. 40°C. Man lässt 30 min bei Raumtemperatur rühren und erhitzt danach 3 h unter Rückfluss. Das Reaktionsgemisch wird auf 5-10 °C abgekühlt und 4,26 g (0,093 mol) Ameisensäure zugetropft. Man lässt 30 min nachrühren, entfernt das Lösemittel im Vakuum und schlämmt den Rückstand in Diethylether auf. Der Rückstand wird abgesaugt und mehrmals mit Diethylether gewaschen. Nach Trocknen erhält man 20,7 g (99 %) N-(6-Methyl-2-pyridinyl)phosphorsäureamiddichlorid. Das Rohprodukt wird ohne weitere Reinigung zur Aminierung eingesetzt.

In 50 ml Diethylether werden bei -70 - -40 °C ca. 50 ml Ammoniak einkondensiert. Unter Rühren fügt man bei ca. -60°C portionsweise 20,7 g (0,092 mol) N-(6-Methyl-2-pyridinyl)phosphorsäureamiddichlorid zu. Nach 2 h bei -30°C lässt man über Nacht bei Raumtemperatur den Ammoniak abdampfen. Der ausgefallene Feststoff wird abgesaugt und 2 h mit 15 ml Diethylamin und 150 ml Chloroform ausgekocht. Nach Abkühlen wird das Triamid abgesaugt, mit Chloroform gewaschen und getrocknet.
Ausbeute: 5,0 g, 29 %;
Fp: 125-135 °C;
¹³C-NMR (DMSO-*d₆*): δ[ppm] = 23,9; 107,8 (d, *J* = 5,1 Hz); 113,8; 137,5; 155,1 (d, *J* = 2,7 Hz) ; 155, 7 (d, *J* = 0, 9 Hz); ¹H-NMR (DMSO-*d₆*) : δ [ppm] = 7,39 (t, 1H, *J* = 7,8 Hz); 7, 33 (d, 1H, *J* = 7,6 Hz); 6,80 (d, 1H, *J* = 8,2 Hz) ; 6, 59 (d, 1H, *J* = 7,2 Hz); 3,99 (s, 4H);
31_{P-NMR} (DMSO-*d₆*) : δ [ppm] = 13,0;

| | | | | | |
|---|---|---|---|---|---|
| EA: | ber. | C 38,7 %; | H 6,0 %; | N 30,1 %; | P 16,6 % |
| | gef. | C 38,3 %; | H 6,5 %; | N 29,6 %; | P 16,0 % |

### Beispiel 1

### N-(3-Nitro-2-pyridinyl)phosphorsäuretriamid (Verbindung Nr. 3)

Unter Inertgas werden 10 g (0,072 mol) 3-Nitro-2-aminopyridin in 35 ml Chloroform suspendiert und anschließend 15,0 g (0,072 mol) PCl₅ zugegeben. Man lässt 30 min bei Raumtemperatur rühren und erhitzt danach 3 h unter Rückfluss. Das Reaktionsgemisch wird auf 5-10 °C abgekühlt und 3,31 g (0,072 mol) Ameisensäure zugetropft. Man lässt 30 min nachrühren, entfernt das Lösemittel im Vakuum und schlämmt den Rückstand in Diethylether auf. Der Rückstand wird abgesaugt und mehrmals mit Diethylether gewaschen. Nach Trocknen erhält man 16,2 g (88 %) *N*-(3-Nitro-2-pyridinyl)phosphorsäureamiddichlorid. Das Rohprodukt wird ohne weitere Reinigung zur Aminierung eingesetzt.

In 60 ml Diethylether werden bei -70 - -40 °C ca. 60 ml Ammoniak einkondensiert. Unter Rühren fügt man bei ca. -60 °C portionsweise 16,2 g (0,063 mol) *N*-(3-Nitro-2-pyridinyl)phosphorsäureamiddichlorid zu. Nach 2 h bei -30 °C lässt man über Nacht bei Raumtemperatur den Ammoniak abdampfen. Der ausgefallene Feststoff wird abgesaugt, dreimal mit je 30 ml Wasser gewaschen und mit 80 ml Methanol ausgekocht. Nach Abkühlen wird das Triamid abgesaugt und getrocknet.
Ausbeute: 10,2 g, 76 %;
Fp: >300 °C (Zers.);
¹³C-NMR (DMSO-*d*₆) : δ[ppm] = 115, 2; 129,6 (d, *J* = 6,2 Hz) ; 135,2; 149,9; 155,0;
¹H-NMR (DMSO-*d*₆): δ[ppm] = 8,47-8,57 (m, 3H); 7,05 (q, 1H, *J* = 4,6 Hz); 4,35 (s, 4H);
³¹_{P-NMR} (DMSO-*d₆*) : δ[ppm) = 12,7;

| | | | | | |
|---|---|---|---|---|---|
| EA: | ber. | C 27,7 %; | H 3,7 %; | N 32,3 %; | P 14,3 % |
| | gef. | C 27,5 %; | H 3,8 %; | N 32,6 %; | P 14,3 % |

### Beispiel 2

### N-(6-Nitro-2-pyridinyl)phosphorsäuretriamid (Verbindung Nr. 4)

Unter Inertgas werden 10 g (0,072 mol) 6-Nitro-2-aminopyridin in 30 ml Chloroform gelöst und anschließend 15,0 g (0,072 mol) PCl₅ zugegeben. Man lässt 30 min bei Raumtemperatur rühren, erhitzt langsam zum Sieden und rührt 3 h unter Rückfluss. Das Reaktionsgemisch wird auf 5-10 °C abgekühlt und 3,31,g (0,072 mol) Ameisensäure zugetropft. Man lässt 30 min nachrühren, entfernt das Lösemittel im Vakuum und schlämmt den Rückstand in Diethylether auf. Der Rückstand wird abgesaugt und mehrmals mit Diethylether gewaschen. Nach Trocknen erhält man 11,4 g (60 %) *N*-(6-Nitro-2-pyridinyl)phosphorsäureamiddichlorid. Das Rohprodukt wird ohne weitere Reinigung zur Aminierung eingesetzt.

In 40 ml Diethylether werden bei -70 - -40 °C ca. 40 ml Ammoniak einkondensiert. Unter Rühren fügt man bei ca. -60 °C portionsweise 11,4 g (0,043 mol) *N*-(6-Nitro-2-pyridinyl)phosphorsäureamiddichlorid zu. Nach 2 h bei -30 °C lässt man über Nacht bei Raumtemperatur den Ammoniak abdampfen. Der ausgefallene Feststoff wird abgesaugt, dreimal mit je 10 ml Wasser gewaschen und mit 80 ml Methanol ausgekocht. Nach Abkühlen wird das Triamid abgesaugt und getrocknet.
Ausbeute: 6,9 g, 74 %;
Fp: 180-182 °C (Zers.);
¹³C-NMR (DMSO-*d*₆) : δ[PPm] = 110,4 (d, *J* = 5,3 Hz); 132,7; 136,8; 145,3; 160,3 (d, *J* = 2,4 Hz);
¹H-NMR (DMSO-d₆) : δ[ppm] = 8,98 (d, 1H, *J* = 2,7 Hz); 8,5 (m, 1H); 8,29 (dd, 1H, *J* = 2,8 Hz/9,3 Hz); 7,14 (d, 1H, *J* = 9, 3 Hz) ; 4,31 (s, 4H) ;
³¹P-NMR (DMSO-d₆) : δ[ppm] = 11,9;

| | | | | | |
|---|---|---|---|---|---|
| EA: | ber. | C 27,7 %; | H 3,7 %; | N 32,3 %; | P 14,3 % |
| | gef. | C 27,4 %; | H 3,8 %; | N 32,4 %; | P 14,0 % |

### Beispiel 3

### N-(5-Brom-2-pyridinyl)phosphorsäuretriamid (Verbindung Nr. 5)

Unter Inertgas werden 10 g (0,058 mol) 5-Brom-2-aminopyridin in 20 ml Chloroform suspendiert und anschließend unter Eiskühlung 12,1 g (0,058 mol) PCl₅ zugegeben. Man lässt 30 min rühren, erwärmt langsam und erhitzt danach 3 h unter Rückfluss. Das Reaktionsgemisch wird auf 5-10 °C abgekühlt und 2,67 g (0,058 mol) Ameisensäure zugetropft. Man lässt 30 min nachrühren, saugt den ausgefallenen Feststoff und wäscht diesen mit Chloroform und Diethylether. Nach Trocknen erhält man 16,8 g (100 %) *N*-(5-Brom-2-pyridinyl)phosphorsäureamiddichlorid (Fp >180 °C, Zers.). Das Rohprodukt wird ohne weitere Reinigung zur Aminierung eingesetzt.

In 50 ml Diethylether werden bei -70 - -40 °C ca. 50 ml Ammoniak einkondensiert. Unter Rühren fügt man bei ca. -60 °C portionsweise 16,8 g (0,058 mol) *N*-(5-Brom-2-pyridinyl)phosphorsäureamiddichlorid zu. Nach 2 h bei -30°C lässt man über Nacht bei Raumtemperatur den Ammoniak abdampfen. Der ausgefallene Feststoff wird abgesaugt und 2 h mit 40 ml Diethylamin und 400 ml Chloroform ausgekocht. Nach Abkühlen wird das Triamid abgesaugt und in 70 ml Methanol ausgekocht. Nach Abkühlen wird das Produkt abgesaugt und getrocknet.
Ausbeute: 11,1 g, 76 %;
Fp: 172-173 °C;
¹³C-NMR (DMSO-*d₆*) : δ [ppm] = 108,9; 112, 9 (d, *J* = 5,0 Hz); 139,5; 147,7; 154,9 (d, *J* = 2,8 Hz);
¹H-NMR (DMSO-*d₆*) : δ [ppm] = 8,16 (d, 1H, *J* = 2,5 Hz); 7,78 (d, 1H, *J* = 7,4 Hz); 7,70 (dd, 1H, *J* = 2,6 Hz/8, 9 Hz); 7,00 (d, 1H, *J* = 8,9 Hz); 4,07 (s, 4H);
31_{P-NMR} (DMSO-*d₆*) : δ [ppm] = 12,3;

| | | | | | |
|---|---|---|---|---|---|
| EA: | ber. | C 23,9 %; | H 3,2 %; | N 22,3 %; | P 12,3 % |
| | gef . | C 23,3 %; | H 2,0 %; | N 22,7 %; | P 12,4 % |

### Vergleichbeispiel 3

### N-(2-Pyrazinyl)phosphorsäuretriamid (Verbindung Nr. 6)

Unter Inertgas werden 10 g (0,105 mol) 2-Aminopyrazin in 30 ml Chloroform suspendiert und anschließend unter Eiskühlung 21,9 g (0,105 mol) PCl₅ zugegeben. Man lässt 30 min rühren, erwärmt langsam und erhitzt danach 3 h unter Rückfluss. Das Reaktionsgemisch wird auf 5-10 °C abgekühlt und 4,84 g (0,105 mol) Ameisensäure zugetropft. Man lässt 30 min nachrühren, saugt den ausgefallenen Feststoff und wäscht diesen mit Chloroform und Diethylether. Nach Trocknen erhält man 22,3 g (100 %) N-(2-Pyrazinyl)phosphorsäureamiddichlorid (Fp >140 °C, Zers.). Das Rohprodukt wird ohne weitere Reinigung zur Aminierung eingesetzt.

In 100 ml Diethylether werden bei -70 - -40 °C ca. 100 ml Ammoniak einkoridensiert. Unter Rühren fügt man bei ca. -60 °C portionsweise 16,8 g (0,105 mol) N-(2-Pyrazinyl)phosphorsäureamiddichlorid zu. Nach 2 h bei -30 °C lässt man über Nacht bei Raumtemperatur den Ammoniak abdampfen. Der ausgefallene Feststoff wird abgesaugt und 2 h mit 50 ml Diethylamin und 500 ml Chloroform ausgekocht. Nach Abkühlen wird das Triamid abgesaugt und in 50 ml Methanol ausgekocht. Nach Abkühlen wird das Produkt abgesaugt und getrocknet.
Ausbeute: 10,9 g, 60 %;
Fp: 180-182 °C;
¹³C-NMR (D₂O) : δ[ppm] = 134, 1 (d, *J* = 8,6 Hz) ; 135, 5; 142, 1; 151,3 (d, *J =* 1,8 Hz);
¹H-NMR (D₂O): δ[ppm] = 8,21 (s, breit, 1H); 8,17 (s, breit, 1H,) ; 8,05 (d, 1H, *J* = 2, 6 Hz) ;
31p-NMR (D₂O) : δ [ppm] = 14,3;

| | | | | | |
|---|---|---|---|---|---|
| EA: | ber. | C 27,8 %; | H 4,7 %; | N 40,5 %; | P 17,9 % |
| | gef. | C 27,3 %; | H 4,6 %; | N 40,4 %; | P 17,5 % |

### Beispiel 7

### Prüfung auf ureasehemmende Wirkung

30 g auf 40 % der maximalen Wasserkapazität eingestellter Boden werden mit 1 ml Harnstofflösung entsprechend 50 mg Harnstoff versetzt. Parallel hierzu erfolgt die Applikation des Wirkstoffes, vorzugsweise in Wasser gelöst. Die Konzentrationsangaben für die einzelnen geprüften Wirkstoffe beziehen sich in den nachfolgenden Tabellen auf ihren prozentualen Anteil, bezogen auf die im Test verwendete Menge an Harnstoffstickstoff. Das Ganze befindet sich in einem luftdicht verschlossenen Gefäß, in das gleichzeitig eine Vorlage eingebracht wird, die den aus dem Harnstoff freigesetzten Ammoniak als Ammonium auffängt, dessen Gehalt anschließend bestimmt wird.

Aus der kumulativen Bestimmung der Ammoniumkonzentration in der Vorlage wird die prozentuale Hemmung in Abhängigkeit von der Zeit berechnet bzw. aus diesen Werten der t₅₀- Wert rechnerisch ermittelt.

Als t₅₀-Wert wird dabei diejenige Zeit in Tagen definiert, bei der die Harnstoffhydrolyse noch zu 50 % gehemmt ist.

Tabelle 1 gibt einen Überblick über die nach dieser Methode ermittelten Hemmdaten einiger ausgewählter erfindungsgemäßer Verbindungen.

**Tabelle 1: Ureasehemmung (t₅₀-Wert), nach Tagen durch N-(2-Pyridinyl)phosphorsäuretriamide bzw. N-(2-Pyrazinyl)phosphorsäuretriamid**

| Nr. | Struktur (Formel (I)) | | | | | Konz. % HS-N- bez. | t₅₀-Wert (d) |
|---|---|---|---|---|---|---|---|
| | R¹ | R² | R³ | R⁴ | Y | | |
| *1 | H | H | H | H | CH | 0,1 | 5,31 |
| *2 | H | H | H | CH₃ | CH | 0,1 | 5,62 |
| 3 | H | NO₂ | H | H | CH | 0,1 | 7,55 |
| 4 | H | H | H | NO₂ | CH | 0,1 | 6,55 |
| 5 | H | H | Br | H | CH | 0,1 | 9,7 |
| *6 | H | H | H | H | N | 0,1 | 7, 63 |

| | | | | | | | |
|---|---|---|---|---|---|---|---|
| Konz. % HS-N-bez.: Konzentration in Prozent bezogen auf die verwendete Menge an Harnstoffstickstoff * Vergleichsbeispiele | | | | | | | |

## Patentansprüche

1. N-(2-Pyridinyl)phosphorsäuretriamide der allgemeinen Formel (I), 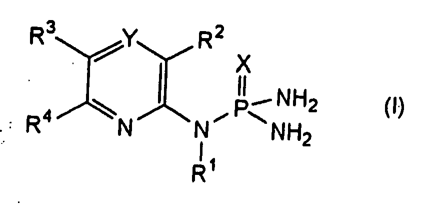 in der bedeuten:
| R¹ | R² | R³ | R⁴ | Y |
|---|---|---|---|---|
| H | NO₂ | H | H | CH |
| H | H | H | NO₂ | CH |
| H | H | Br | H | CH |
und X = 0

2. Verfahren zur Herstellung der N-(2-Pyridinyl)phosphorsäuretriamide nach Anspruch 1, **dadurch gekennzeichnet, dass** man
a₁) Phosphorpentachlorid (PCl₅) mit einem 2-Aminopyrimidin (IV) in annähernd äquimolarem Verhältnis in einem inerten organischen Lösemittel und unter Schutzgasatmosphäre bei 0 bis 50 °C entsprechend Gleichung (1) zu Verbindungen des Typs (A) reagieren lässt, welche ohne weitere Isolation mit einer annähernd äquimolaren Menge Ameisensäure zu Phosphorsäureamiddichloriden des Typs (B), in denen R¹ Wasserstoff, Y = CH und X = 0 ist, umgesetzt werden 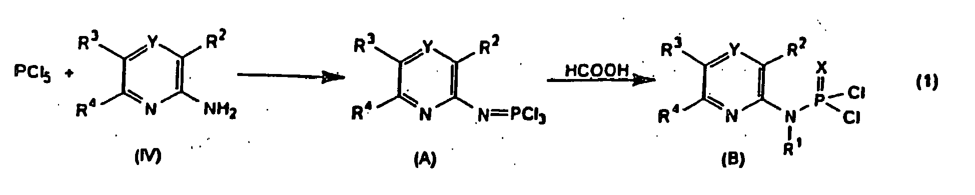 oder
a₂) 2-Aminopyridine (IV) oder deren Hydrochloride mit einem Überschuss Phosphorylchlorid (POCl₃) bei Temperaturen von 80 bis 120 °C oder in Anwesenheit einer tertiären Base bei Raumtemperatur entsprechend Gleichung (2), ggf. in einem organischen Lösemittel zu Phosphorsäureamiddichloriden des Typs (B), in denen R¹ = Wasserstoff, Y = CH und X = 0 ist, umsetzt 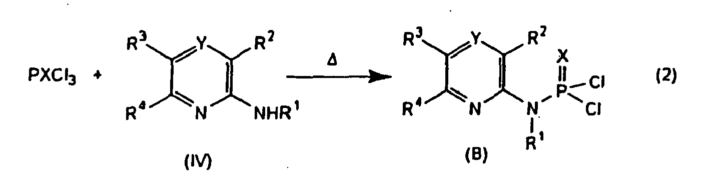 und anschließend
b) die in Stufe a₁) oder a₂) gebildeten Verbindungen des Typs B mit Ammoniak ggf. in einem organischen Lösemittel bei Temperaturen von -80 bis 20 °C entsprechend Gleichung (3) zum gewünschten Endprodukt reagieren lässt.

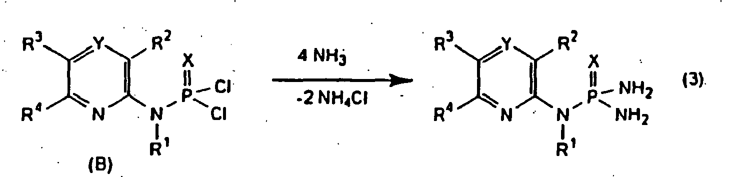

3. Verfahren nach Anspruch 2, **dadurch gekennzeichnet, dass** man die Reaktionsstufe a₁) unter Schutzgasatmosphäre bestehend aus Stickstoff oder Argon durchführt.

4. Verfahren nach Anspruch 2 oder 3, **dadurch gekennzeichnet. dass** in Reaktionsstufe a₁) als organisches Lösemittel Chloroform oder Toluol und in Reaktionsstufe a₂) Chloroform, Toluol, THF oder Diethylether eingesetzt wird.

5. Verfahren nach einem der Ansprüche 2 bis 4, **dadurch gekennzeichnet, dass** die Reaktionsstufe b) in Gegenwart eines organischen Lösemittels ausgewählt aus der Gruppe Dichlormethan, Chloroform, Diethylether oder THF durchgeführt wird.

6. Verwendung der N-(2-Pyridinyl)phosphorsäuretriamide nach Anspruch 1 bei der Stickstoffdüngung unter Einsatz harnstoff-basierter mineralischer und/oder organischer Düngemittel.

7. Verwendung der N-(2-Pyridinyl)phosphorsäuretriamide nach Anspruch 1, **dadurch gekennzeichnet, dass** sie zur Regulierung bzw. Hemmung der ureasekatalysierten Harnstoffhydrolyse und zur Verminderung der Ammoniakbelastung dem Futterharnstoff oder dem Dung bzw. den tierischen Exkrementen in Tierställen zugesetzt werden.

8. Verwendung nach einem oder Ansprüche 6 oder 7, **dadurch gekennzeichnet, dass** die N-(2-Pyridinyl)phosphorsäuretriamide mit mindestens einer Verbindung ausgewählt aus der Gruppe der
a) Pyrazol-Derivate der allgemeinen Formel (V), deren Salze oder Komplexverbindungen, 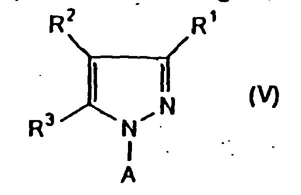 in der
R¹, R², R³ unabhängig voneinander Wasserstoff, Halogen oder C₁-C₈-Alkyl und
A den Rest 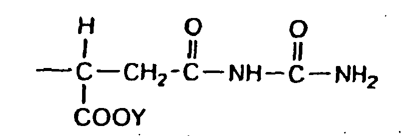 mit Y = H, Na, K, NH₄
oder den Rest
-CH₂-B
mit B = (Di)alkylamino, 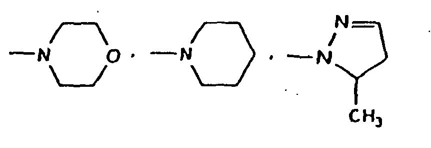 oder den Rest 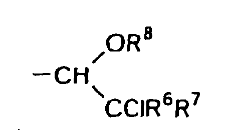
mit R⁶, R⁷ = H oder Cl und
R⁸ = H oder 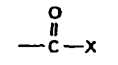 mit X = C₁-C₈-Alkoxy, C₁-C₈-Alkylamino, C₆-C₁₀-Arylamino
oder den Rest 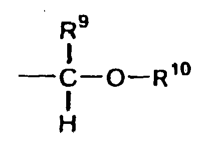 mit R⁹, R¹⁰ = H, C₁-C₈-Alkyl, C₇-C₁₈-Alkylaryl, C₆-C₁₀-Aryl
bedeuten,
b) 1H-1,2,4-Triazole, deren Salze oder Komplexverbindungen sowie
c) Dicyandiamid kombiniert werden.

9. Zusammensetzung umfassend ein N-(2-Pyridinyl)phosphorsäuretriamid nach Anspruch 1 und ein harnstoffbasiertes mineralisches und/oder organisches Düngemittel.

10. Zusammensetzung nach Anspruch 9, **dadurch gekennzeichnet, dass** die N-(2-Pyridinyl)phosphorsäuretriamide in einer Menge von 0,05 bis 30 Gew.-% bezogen auf das Gewicht des harnstoffbasierten Düngemittels eingesetzt werden.

11. Zusammensetzung nach Anspruch 9 oder 10, **dadurch gekennzeichnet, dass** sie zusätzlich mindestens eine Verbindung ausgewählt aus der Gruppe der
a) Pyrazol-Derivate der allgemeinen Formel (v), deren Salze oder Komplexverbindungen, 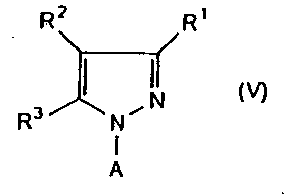 in der
R¹, R², R³ unabhängig voneinander Wasserstoff, Halogen oder C₁-C₈-Alkyl und
A den Rest 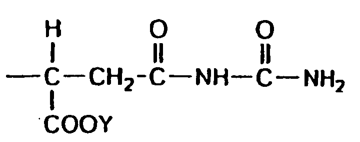 mit Y = H, Na, K, NH₄
oder den Rest
-CH₂-B
mit B = (Di)alkylamino, 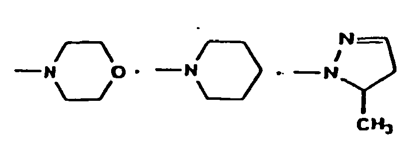 oder den Rest 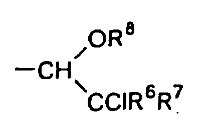
mit R⁶, R⁷ = H oder Cl und
R⁸ = H oder 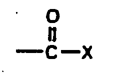 mit X = C₁-C₈-Alkoxy, C₁-C₈-Alkylamino, C₆-C₁₀-Arylamino.
oder den Rest 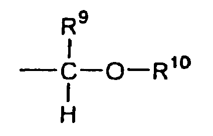 mit R⁹, R¹⁰ = H, C₁-C₈-Alkyl, C₇-C₁₈-Alkylaryl, C₆-C₁₀-Aryl
bedeuten,
b) 1H-1,2,4-Triazole, deren Salze oder Komplexverbindungen sowie
c) Dicyandiamid enthält.

## Claims

1. N-(2-pyridinyl) phosphoric acid triamides with the general formula 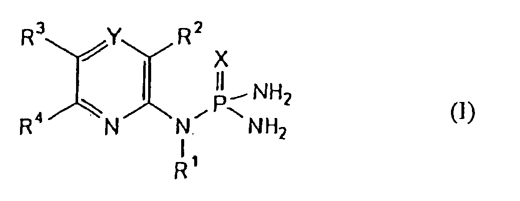 in which
| R¹ | R² | R³ | R⁴ | Y |
|---|---|---|---|---|
| denote | | | | |
| H | NO₂ | H | H | CH |
| H | H | H | NO₂ | CH |
| H | H | Br | H | CH |
and X = 0.

2. A method for producing the N-(2-pyridinyl)phosphoric acid triamides according to Claim 1, **characterised in that** one
a₁) allows phosphorpentachloride (PCl₅) to react with a 2-aminopyrimidin (IV) in an approximately equimolar ratio in an inert organic solvent and in a protective gas atmosphere at from 0 to 50°C in accordance with equation (1) to form compounds of type (A), which without any further isolation with an approximately equimolar quantity of formic acid are converted into phosphoric acid amide dichlorides of type (B) in which R¹ is hydrogen, Y = CH and X = 0, 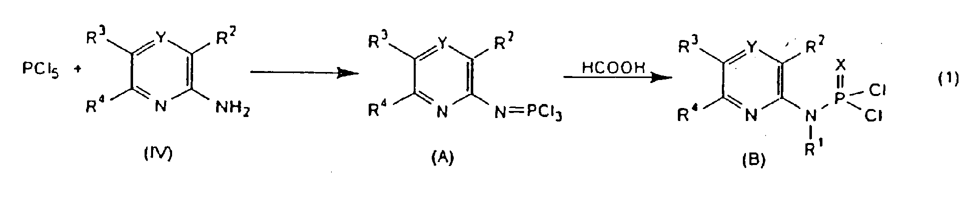 or
a₂) converts 2-aminopyridines (IV) or hydrochlorides of the latter with an excess of phosphoryl chloride (POCl), at temperatures of from 80 to 120°C, or in the presence of a tertiary base at room temperature, in accordance with equation (2), if appropriate in an organic solvent, into phosphoric acid amide dichlorides of type (B) in which R¹ = hydrogen, Y = CH and X = O, 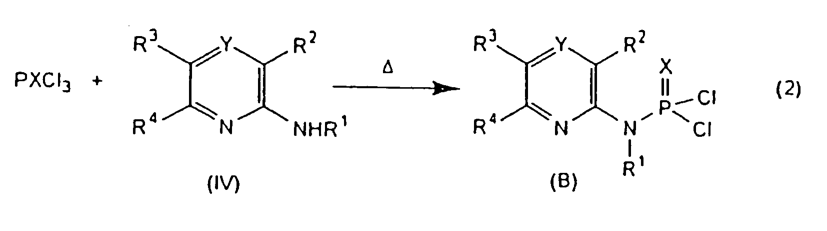 and then
b) allows the compounds of type B formed in step a₁) or a₂) to react with ammonia, if appropriate in an organic solvent at temperatures of from -80 to 20°C in accordance with equation (3) to form the desired end product.

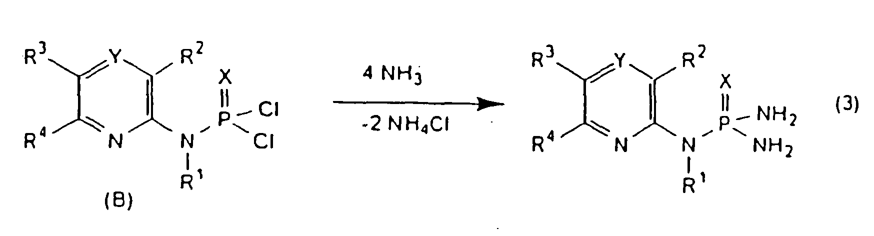

3. The method according to Claim 2, **characterised in that** reaction step a₁) is conducted in a protective gas atmosphere consisting of nitrogen or argon.

4. The method according to Claim 2 or 3, **characterised in that** in reaction step a₁), chloroform or toluene is used as an organic solvent, and in reaction step a₂) chloroform, toluene, THF or diethyl ether are used.

5. The method according to any of Claims 2 to 4, **characterised in that** reaction step b) is conducted in the presence of an organic solvent selected from the group of dichloromethane, chloroform, diethyl ether or THF.

6. The use of the N-(2-pyridinyl) phosphoric acid triamides according to Claim 1 with nitrogen fertilisation using a urea-based mineral and/or organic fertiliser.

7. The use of the N-(2-pyridinyl) phosphoric acid triamides according to Claim 1, **characterised in that** they are added to the feed urea or the dung or animal excrement in animal enclosures in order to regulate or inhibit the urease-catalysed hydrolysis of urea and to reduce the ammonia charging.

8. The use according to anyone of Claims 6 or 7, **characterised in that** the N-(2-pyridinyl)phosphoric acid triamides are combined with at least one compound selected from the group of
a) pyrazole derivatives with the general formula (V), the salts or complex compounds of the latter 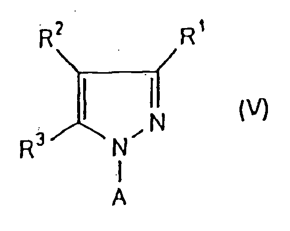 in which denote
R¹, R² or R³ independently of one another hydrogen, halogen or C₁-C₈-alkyl and
A the residue 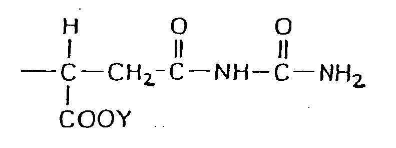 with Y = H, Na, K, NH₄
or the residue
-CH₂-B
with B = (di)alkylamino 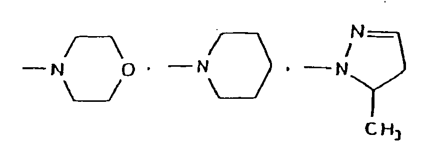 or the residue 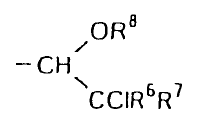
with R⁶, R⁷ = H or Cl and
R⁸= H or 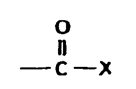 with X = C₁-C₈-alkoxy, C₁-C₈-alkylamino, C₆-C₁₀-arylamino
or the residue 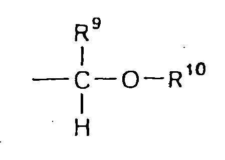 with R⁹, R¹⁰ = H, C₁-C₈-alkyl, C₇-C₁₈-alkylaryl, C₆-C₁₀-aryl,
b) 1H- 1,2,4 -triazoles, the salts or complex compounds of the latter and
c) dicyandiamide.

9. A composition comprising a N-(2-pyridinyl) phosphoric acid triamide according to Claim I and a urea-based mineral and/or organic fertiliser.

10. The composition according to Claim 9, **characterised in that** the N-(2-pyridinyl) phosphoric acid triamides are used in a quantity of from 0.05 to 30 % by weight in relation to the weight of the urea-based fertiliser.

11. The composition according to Claim 9 or 10, **characterised in that** it additionally contains at least one compound selected from the group of
a) pyrazole derivatives with the general formula (IV), the salts or complex compounds of the latter, 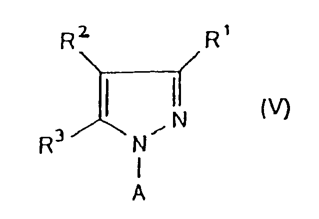 in which denote
R¹, R², R³ independently of one another hydrogen, halogen or C₁-C₈-alkyl, and
A the residue 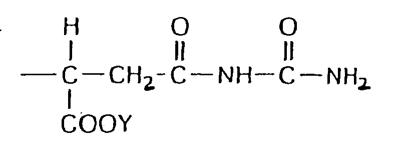 with Y = H, Na, K, NH₄
or the residue
-CH₂-B
with B = (di)alkylamino, 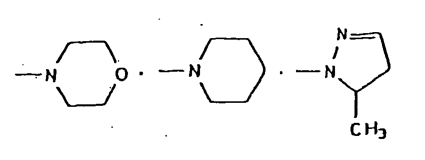 or the residue 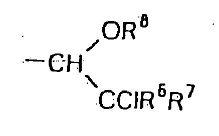
with R⁶, R⁷= H or Cl and
R⁸ = H or 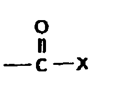 with X = C₁-C₈-alkoxy, C₁-C₈-alkylamino, C₆-C₁₀-arylamino
or the residue 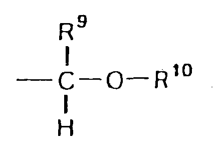 with R⁹, R¹⁰ = H, C₁-C₈-alkyl, C₇-C₁₈-alkylaryl, C₆-C₁₀-aryl,
b) 1H-1,2,4-triazoles, the salts or complex compounds of the latter and
c) dicyandiamide.

## Revendications

1. N-(2-pyridinyl)phosphotriamides de formule générale (I), 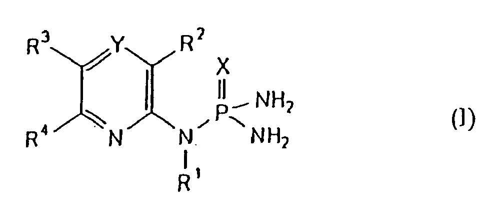 dans laquelle :
| R¹ | R² | R³ | R⁴ | Y |
|---|---|---|---|---|
| H | NO₂ | H | H | CH |
| H | H | H | NO₂ | CH |
| H | H | Br | H | CH |
et X = O

2. Procédé de fabrication de N-(2-pyridinyl)phosphotriamides selon la revendication 1, **caractérisé en ce que**
a₁) on met à réagir, selon l'équation (1), du pentachlorure de phosphore (PCl₅) avec une 2-aminopyrimidine (IV) dans un rapport approximativement équimolaire, dans un solvant organique inerte et sous une atmosphère contrôlée entre 0 et 50°C afin d'obtenir des composés de type (A), lesquels sont transformés sans autre isolation avec une quantité approximativement équimolaire d'acide formique en dichlorures de phosphoramide de type (B), dans lequel R¹ est de l'hydrogène, Y = CH et X = O 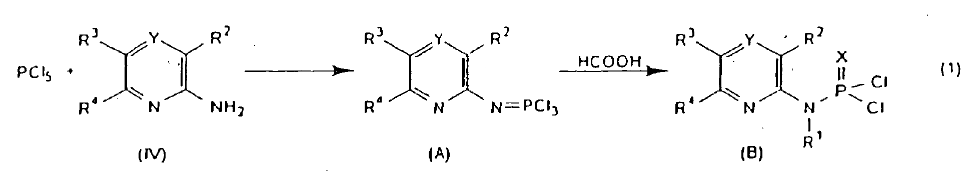 ou
a₂) on transforme, selon l'équation (2), une 2-aminopyrimidine (IV) ou son hydrochlorure avec un excédent de chlorure de phosphoryle (POCl₃), à des températures comprises entre 80 et 120°C ou, en l'absence d'une base tertiaire, à température ambiante, le cas échéant dans un solvant organique afin d'obtenir des dichlorures de phosphoramide de type (B), dans lesquels R¹ est de l'hydrogène, Y = CH et X = O 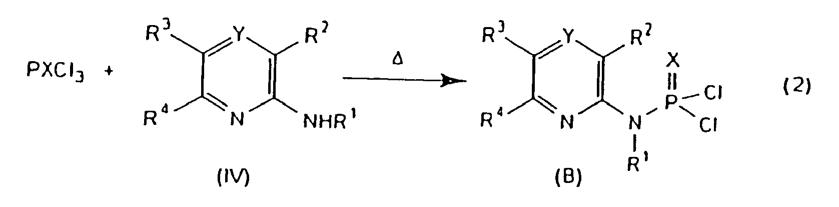 et enfin
b) on met à réagir, selon l'équation (3), les composées obtenus dans l'étape a₁) ou a₂) avec de l'ammoniac, le cas échéant dans un solvant organique à des températures comprises entre -80 et 20°C afin d'obtenir le produit final souhaité.

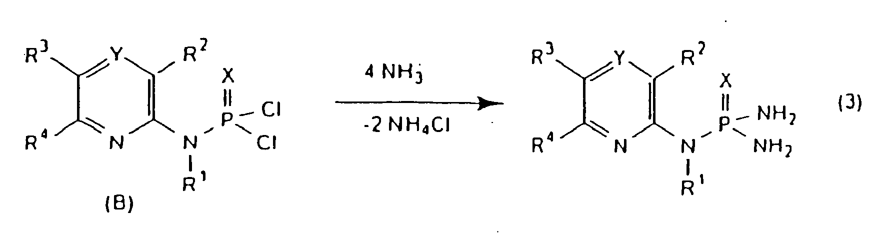

3. Procédé selon la revendication 2, **caractérisé en ce que** l'étape de réaction a₁) est réalisée sous atmosphère contrôlée composée d'azote ou d'argon.

4. Procédé selon la revendication 2 ou 3, **caractérisé en ce que**, dans l'étape de réaction a₁), le solvant organique utilisé est du chloroforme ou du toluène et, dans l'étape de réaction a₂), on utilise du chloroforme, du toluène, du THF ou du diéthyléther.

5. Procédé selon l'une quelconque des revendications 2 à 4, **caractérisé en ce que** l'étape de réaction b) est réalisée en présence d'un solvant organique choisi dans le groupe composé du dichlorométhane, du chloroforme, du diéthyléther ou du THF.

6. Utilisation des N-(2-pyridinyl)phosphotriamides selon la revendication 1 en cas de fertilisation azotée à l'aide d'engrais organiques et/ou minéraux à base d'urée.

7. Utilisation des N-(2-pyridinyl)phosphotriamides selon la revendication 1, **caractérisée en ce qu'**elles sont ajoutées à l'urée fourragère, au fumier ou aux excréments animaux afin de réguler ou ralentir l'hydrolyse d'urée catalysée par uréase, et minimiser la concentration d'ammoniac.

8. Utilisation selon l'une quelconque des revendications 6 ou 7, **caractérisée en ce que** les N-(2-pyridinyl)phosphotriamides sont combinés avec au moins un composé choisi dans le groupe composé de :
a) dérivés de pyrazole de formule générale (V), leurs sels ou composés complexes, 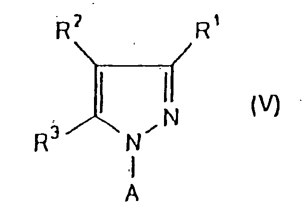 dans lesquels
R¹, R², R³ sont, indépendamment les uns des autres, de l'hydrogène, de l'halogène ou de l'alkyle en C₁ à C₈ et
A est le résidu 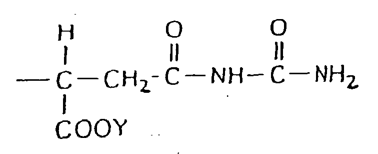 avec Y = H, Na, K, NH₄
ou le résidu
-CH₂-B
avec B = (di)alkylamino, 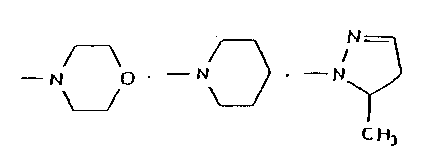 ou le résidu 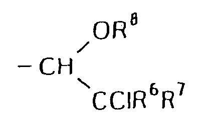
avec R⁶, R⁷ = H ou Cl et
R⁸ = H ou 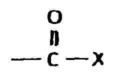 avec X = alkoxy en C₁ à C₈, alkylamino en C₁ à C₈, arylamino en C₆ à C₁₀
ou le résidu 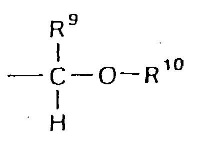 avec R⁹, R¹⁰ = H, alkyle en C₁ à C₈, alkylaryle en C₇ à C₁₈, aryle en C₆ à C₁₀
b) 1H-1,2,4-triazole, ses sels ou composés complexes, ainsi que
c) dicyandiamide.

9. Composition comprenant un N-(2-pyridinyl)phosphotriamide selon la revendication 1 et un engrais organique et/ou minéral à base d'urée.

10. Composition selon la revendication 9, **caractérisée en ce que** les N-(2-pyridinyl)phosphotriamides sont utilisés dans une quantité de 0,05 à 30 % en poids par rapport au poids de l'engrais à base d'urée.

11. Composition selon la revendication 9 ou 10, **caractérisée en ce qu'**elle contient au moins un composé choisi dans le groupe composé de:
a) dérivés de pyrazole de formule générale (V), leurs sels ou composés complexes, 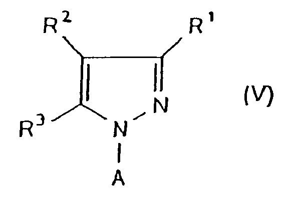 dans lesquels
R¹, R², R³ sont, indépendamment les uns des autres, de l'hydrogène, de l'halogène ou de l'alkyle en C₁ à C₈ et
A est le résidu 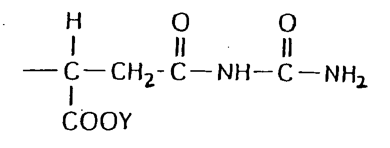 avec Y = H, Na, K, NH₄
ou le résidu
-CH₂-B
avec B = (di)alkylamino, 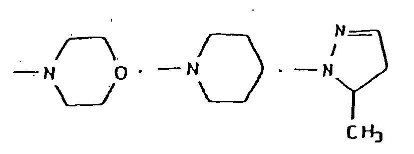 ou le résidu 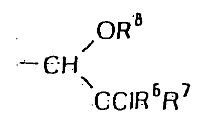
avec R⁶, R⁷ = H ou Cl et
R⁸ = H ou 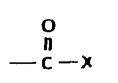 avec X = alkoxy en C₁ à C₈, alkylamino en C₁ à C₈, arylamino en C₆ à C₁₀
ou le résidu 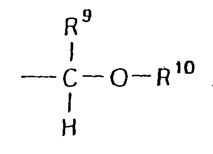 avec R⁹, R¹⁰ = H, alkyle en C₁ à C₈, alkylaryle en C₇ à C₁₈, aryle en C₆ à C₁₀
b) 1 H-1,2,4-triazole, ses sels ou composés complexes, ainsi que
c) dicyandiamide.
